Europäisches Patentamt

(19) European Patent Office

Office européen des brevets

(11) Numéro de publication: **0 270 749**
**B1**

(12) **FASCICULE DE BREVET EUROPEEN**

(45) Date de publication du fascicule du brevet:
**04.04.90**

(51) Int. Cl.⁴: **B60C 23/04, H01R 39/64**

(21) Numéro de dépôt: **87112974.8**

(22) Date de dépôt: **04.09.87**

(54) **Dispositif de transmission d'un signal électrique en provenance d'une roue motrice sur un véhicule, applicable à la surveillance d'un pneumatique.**

(30) Priorité: **04.11.86 FR 8615453**

(43) Date de publication de la demande:
**15.06.88 Bulletin 88/24**

(45) Mention de la délivrance du brevet:
**04.04.90 Bulletin 90/14**

(84) Etats contractants désignés:
**AT BE CH DE ES FR GB GR IT LI LU NL SE**

(56) Documents cités:
**US-A- 2 235 930**
**US-A- 3 675 198**
**US-A- 3 757 294**
**US-A- 4 489 599**

(73) Titulaire: **MICHELIN & CIE (Compagnie Générale des Etablissements Michelin) Société dite:, 4 rue du Terrail, F-63000 Clermont-Ferrand(FR)**

(72) Inventeur: **Pompier, Jean-Pierre, Enval, F-63530 Volvic(FR)**

(74) Mandataire: **Renaudie, Jacques et al, Michelin & Cie Service K. Brevets, F-63040 Clermont-Ferrand Cédex(FR)**

**Description**

La présente invention se rapporte à la transmission d'un signal électrique par conduction électrique entre une roue motrice et un véhicule.

La surveillance de la pression de gonflage des pneumatiques pose un problème à ce jour encore mal résolu : celui de la transmission de l'information entre un organe tournant, à savoir la roue, et le véhicule auquel est relié cette roue, ou plus exactement ce que l'on appellera dans la suite "l'espace fixe du véhicule" par opposition aux organes mobiles en rotation par rapport à cet espace fixe. L'espace fixe comprend notamment les bras de suspension et le porte-roue.

Les dispositifs utilisant la conduction électrique pour transmettre un signal électrique requièrent la présence d'un contact électrique tournant à un endroit au moins du circuit électrique. Pour éviter le recours à un dispositif à bagues et balais du genre du ceux utilisés dans les moteurs électriques, le brevet US 2 235 930 propose de disposer un contact électrique tournant sur l'axe de rotation de la roue, à l'extrémité du moyeu.

Le brevet US 4 489 599 correspondant au preambule de revendication 1 utilise un roulement au lieu d'un contact électrique tournant pour assurer la transmission d'un signal électrique. Cependant le dispositif proposé est complexe à réaliser, notamment du fait qu'il impose de réaliser deux branchements électriques mécaniquement complexes, à savoir un par cage du roulement. De plus, il est nécessaire qu'il y ait au moins deux roulements pour que le second roulement assure le retour vers la masse du véhicule de manière classique comme c'est la cas pour les circuits de surveillance de l'usure des garnitures de frein. Or, les développements récents en mécanique automobile conduisent à prévoir un seul roulement par roue, c'est-à-dire un roulement utilisant une seule cage fixe et une seule cage mobile en rotation. La tendance à l'intération des pièces conduit même à concevoir des roulements dont une cage constitue par elle-même le moyeu ou le porte-roue. Ces évolutions rendent impossible l'application de la solution proposée par le brevet US 4 489 599.

Le but de la présente invention est de proposer, pour les roues motrices, un dispositif de transmission d'un signal électrique qui fonctionne exclusivement par conduction électrique entre les organes tournants et l'espace fixe du véhicule , et qui soit extrêmement simple à implanter sur les véhicules.

Un autre objectif de l'invention est de proposer un tel dispositif qui n'impose qu'un minimum de modifications aux pièces mécaniques existantes, assurant une simplification par rapport aux dispositions connues.

Selon l'invention, le dispositif de transmission d'un signal électrique par conduction électrique depuis une roue motrice 1, mobile en rotation, vers l'espace fixe d'un véhicule supportant ladite roue par l'intermédiaire d'éléments de suspension, ladite conduction électrique étant assurée par deux chemins conducteurs de l'électricité, l'un assurant la connexion électrique entre les moyens placés sur le véhicule et les moyens placés sur de la roue, l'autre assurant le retour vers la masse du véhicule, le chemin conducteur connecté, sur le véhicule, aux moyens placés sur le vehicule comprenant au moins un roulement de la roue motrice considérée, est caractérisé en ce que le chemin conducteur connecté sur le véhicule, auxdits moyens placés sur le vehicule comprend au moins un élément non suspendu situé dans l'espace fixe, ledit élément étant en contact électrique avec la cage extérieure dudit roulement.

Les figures suivantes illustrent deux applications de l'invention à la transmission de la pression d'un pneumatique, dont on surveille un seuil au moyen d'un mano-contacteur. Ces exemples permettent de bien comprendre le principe de fonctionnement :

La figure 1 est une illustration générale de l'invention.

La figure 2 montre un schéma électrique de connexion d'une ampoule de surveillance d'un pneumatique et d'une ampoule de surveillance de frein.

La figure 3 montre une variante de réalisation de l'invention.

La figure 4 montre une autre application de l'invention.

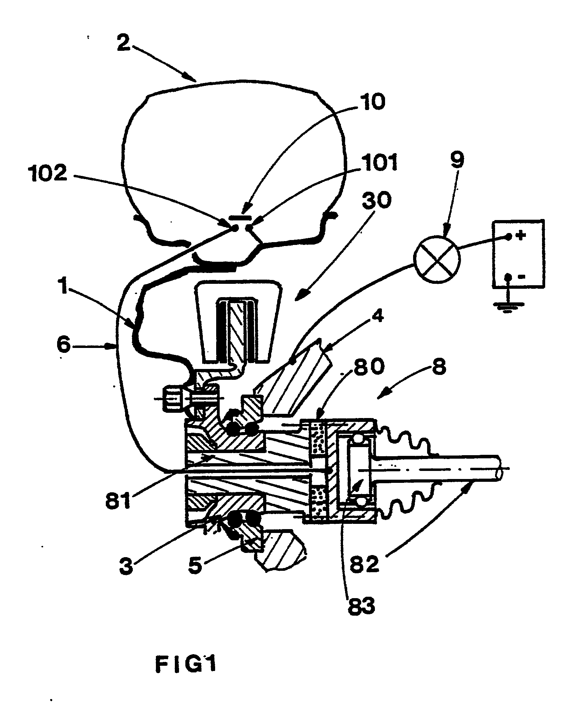

A la figure 1 on a représenté une roue 1 sur laquelle est monté un pneumatique 2. La roue est fixée à un moyeu 3. Le moyeu est fixé à un porte-roue 4 par l'intermédiaire de roulements 5, le moyeu 3 constituant la cage intérieure du roulement 5. Le moyen de surveillance de la roue est ici un mano-contacteur 10 qui maintient ouvert un circuit électrique lorsque la pression est suffisante et qui ferme ledit circuit électrique lorsque la pression tombe en dessous d'un seuil choisi. Les moyens d'exploitation placés sur le véhicule peuvent être constitués très simplement par une ampoule électrique 9 ou une diode électro-luminescente. L'un des pôles 101 du mano-contacteur 10 est relié à une ampoule électrique qui est reliée par ailleurs au pôle positif de la batterie. L'autre pôle 102 du mano-contacteur doit être relié à la masse pour fermer le circuit. Il est donc nécessaire de prévoir deux chemins conducteurs de l'électricité.

L'un des chemins conducteurs comprend l'ensemble des organes mobiles en rotation, à savoir la roue 1, puis le roulement 5 et un ou plusieurs éléments non suspendus situés dans l'espace fixe, par exemple le porte-roue 4. Ensuite on trouve un ou des éléments de la suspension. En règle générale, toutes ces pièces mécaniques sont conductrices de l'électricité. La plupart du temps, les éléments de suspension (bras de suspension et ressorts) sont reliés au châssis par l'intermédiaire de silent-blocs en caoutchouc qui réalisent donc une isolation électrique. Bien souvent un fil électrique conducteur assure la liaison électrique entre lesdites pièces mécaniques et le châssis afin de permettre le retour à la masse du circuit électrique de surveillance de l'usure des garnitures de frein.

A la figure 1, on voit le roulement 5 à l'intérieur duquel passe l'extrémité de la transmission mécanique 8 du couple moteur. Le moyeu 3, ladite transmission mécanique 8, un disque de frein 30 et une roue 1 constituent les pièces mobiles en rotation. Il faut supprimer toute connexion électrique assurant le retour à la masse, par exemple celle du circuit électrique de surveillance d'usure des garnitures de freinage. On relie électriquement le porte-roue 4 aux moyens d'exploitation schématisés dans cet exemple par une ampoule électrique 9 afin de réaliser un chemin électrique conducteur reliant l'ampoule 9 de surveillance au mano-contacteur 10 implanté sur la roue 1. On utilise les roulements de la chaîne de transmission mécanique (en dehors de celui 5 portant la roue) comme contact électrique tournant pour assurer le retour vers la masse. Il faut que la transmission mécanique 8 du couple moteur comporte une isolation électrique 80 entre une partie 81 liée par conduction électrique au porte-roue 4, et une partie 82 en contact électrique avec la masse du véhicule. Cette isolation 80 est ici implantée dans les éléments placés après le dernier joint homocinétique 83. On relie l'un des pôle 101 du mano-contacteur 10 à l'une des pièces tournantes, par exemple à la roue. L'autre pôle 102 du mano-contacteur 10 est relié à la masse par un élément conducteur constitué par un fil conducteur isolé 6, traversant la transmission mécanique 8 dans sa partie 81 isolée électriquement de la masse approximativement par son centre, et connecté à la partie 82 de la transmission mécanique 8 reliée électriquement à la masse. On constate donc que les roulements existants procurent tous les contacts électriques tournants nécessaires, et ceci est particulièrement avantageux. De cette façon, il est possible de réaliser un dispositif de surveillance d'un pneumatique dans lequel un signal électrique est transmis entre la roue et l'espace fixe exclusivement par conduction électrique. En effet le fil conducteur isolé 6 est relié à ses deux extrémités à des pièces immobiles en rotation l'une par rapport à l'autre, à savoir le mano-contacteur 10 implanté sur la roue 1 d'une part, et la transmission mécanique 8 du couple moteur d'autre part. L'autre chemin électrique utilise les pièces mécaniques existantes.

Il est prévu le percement par son centre de l'extrémité finale de la transmission mécanique du couple moteur pour déboucher axialement au centre de la roue. Cette modification à la transmission peut être réalisée sans préjudice de ses performances mécaniques du fait que la zone située sur l'axe n'intervient que pour une part très faible dans la résistance aux sollicitations mécaniques.

On a constaté que la transmission électrique par les roulements n'est pas toujours permanente : cela dépend du type de roulement et également de leur échauffement. Cependant la conduction électrique est toujours suffisante pour transmettre un signal électrique de seuil et on peut très facilement empêcher le clignotement d'une ampoule électrique résultant de l'interruption fugitive de la conduction électrique par tout moyen approprié. Cependant, on a constaté que l'on peut améliorer la conduction électrique en assurant que le passage du courant électrique se fasse aussi par les freins 30 en parallèle de la conduction assurée par les roulements 5 de roue. En effet les garnitures de frein lèchent souvent légèrement les disques de frein même lorsque les freins sont relâchés. De ce fait, dans le dispositif illustré à la figure 1, le chemin électrique comprenant un élément non suspendu situé dans l'espace fixe, à savoir le porte-roue 4, comprend en outre les éléments de freinage 30, les garnitures de frein étant choisies conductrices de l'électricité, et étant en contact électrique avec les étriers.

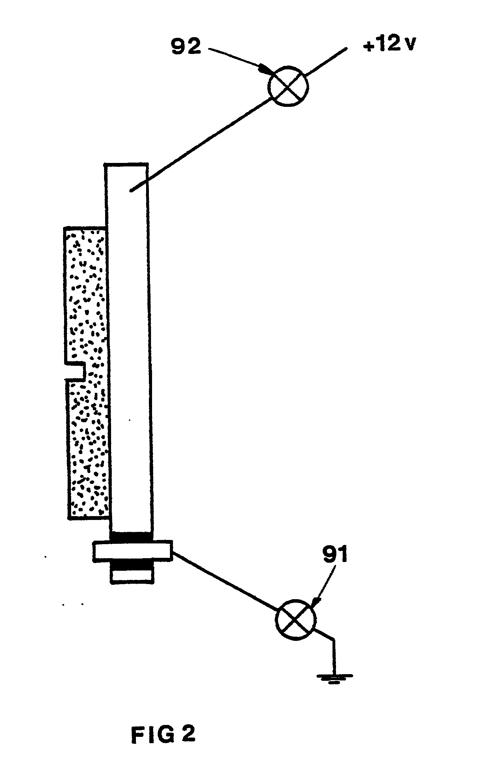

La figure 2 illustre de manière schématique les modifications à prévoir au circuit électrique de surveillance de l'usure des garnitures de freinage. Lorsque le mano-contacteur 10 implanté dans la roue 1 est ouvert, l'ensemble des organes de freinage est porté au potentiel de la borne positive de la batterie. Si l'on se satisfait d'une même ampoule pour indiquer soit une usure des garnitures de freinage, soit une insuffisance de gonflage du pneumatique sans pouvoir distinguer entre ces deux phénomènes, il suffit de raccorder l'élément d'inspection détectant le niveau d'usure maximum d'usure de freinage à la masse. Il est également possible, comme représenté sur la figure 2, de la raccorder à la masse via une ampoule électrique 91 que l'on choisira de puissance nettement inférieure à l'ampoule 92 raccordée à la borne positive de la batterie. Ainsi en cas d'usure maximale des garnitures de freinage, seule l'ampoule 91 brillera et en cas de pression insuffisante, seule l'ampoule 92 brillera. On peut très facilement concevoir un circuit électrique plus élaboré permettant de commander sélectivement des alarmes spécifiques pour chaque phénomène.

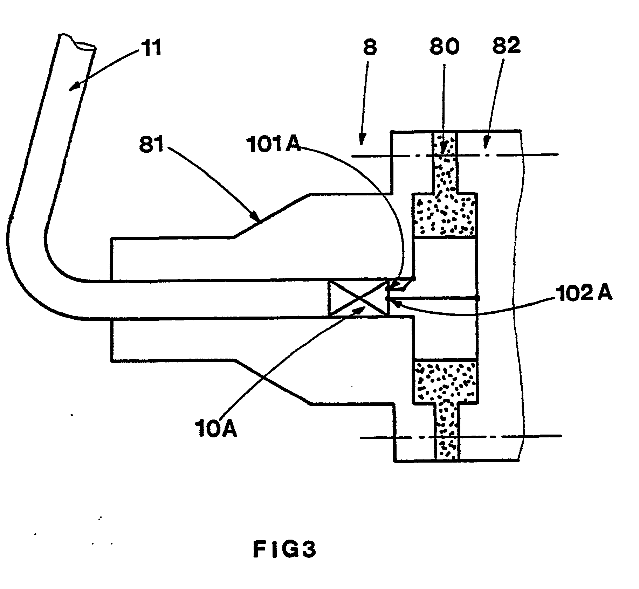

A la figure 3 on a illustré une autre variante de réalisation du dispositif selon l'invention, dans laquelle le moyen de surveillance du pneumatique est également un mano-contacteur 10A. Ce mano-contacteur 10A est monté à l'intérieur de la transmission mécanique 8 du couple moteur. Il est mis en contact pneumatique avec la pression régnant à l'intérieur du pneumatique par une canalisation d'air 11 et en contact électrique par l'un de ses pôles 101A avec la partie de la transmission en contact électrique avec le porte-roue 4 par l'autre de ses pôles 102A avec la partie de la transmission en contact électrique avec la masse.

En variante, la mano-contacteur 10A peut être intégré à l'isolation électrique 80 prévue entre les éléments de la transmission mécanique 8. Cette variante comporte un minimum de modifications aux pièces mécaniques, à savoir un percement central à l'extrémité de la transmission mécanique pour y brancher une canalisation d'air, et une isolation électrique de la transmission. Notons encore qu'il existe des transmissions mécaniques comportant un joint en caoutchouc dans la chaîne cinématique. Il existe également des arbres de transmission réalisés en matériau non conducteur de l'électricité. Ces transmissions sont donc satisfaisantes pour réaliser un dispositif selon la présente invention. Lorsque le fil conducteur reliant la masse doit franchir un joint homocinétique, il le fera par exemple en longeant les soufflets en caoutchouc, dont les pliures réalisent à cette fin de préférence une spirale.

Il est clair que la portée de l'invention n'est pas limitée aux exemples décrits. Ainsi, on pourra prévoir une isolation électrique de la transmission mécanique par tout moyen, que ce soit par interposition d'une section isolante comme illustré ou en isolant convenablement les cannelures en général présentes dans les arbres de transmission. On a décrit l'utilisation comme moyen de surveillance d'un mano-contacteur et comme moyen d'exploitation d'une ampoule électrique. Mais l'invention ne concerne pas ces moyens ; elle se rapporte seulement à la transmission d'un signal électrique par conduction électrique entre des pièces mobiles en rotation et des pièces fixes. On peut concevoir de transmettre n'importe quel type de signal électrique, même un signal codé, pourvu qu'il s'accommode des interruptions fugitives de contacts électriques inhérentes à ce principe de transmission par conduction électrique en utilisant au maximum des éléments non spécifiques.

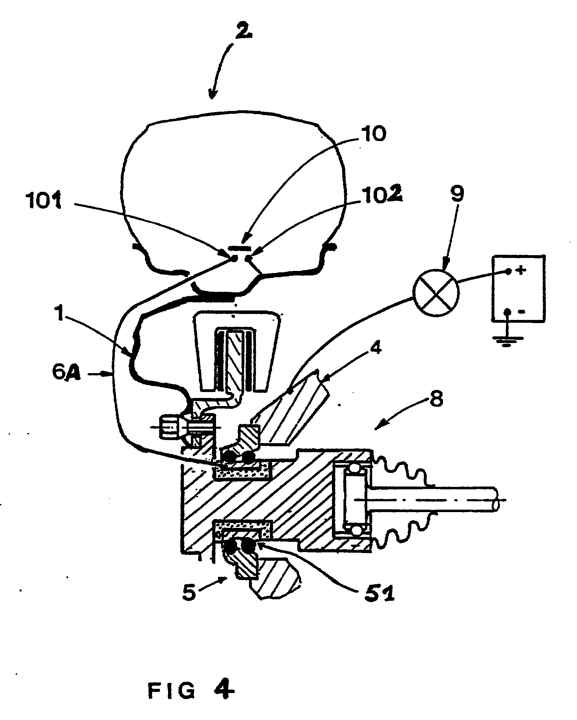

La figure 4 illustre une autre mise en oeuvre de l'invention, applicable dans le cas où l'isolation de la cage intérieure 51 du roulement 5 est plus simple à réaliser que l'insertion d'une isolation dans la transmission mécanique 8 du couple moteur. Ladite cage intérieure 51 est reliée par un fil électrique 6A avec les moyens de surveillance, symbolisés par un manocontacteur 10. Le pôle 102 du manocontacteur 10 est relié à la roue 1, qui fait donc partie du chemin conducteur assurant le retour vers la masse, via la transmission mécanique 8. En pratique, la réalisation d'un tel dispositif n'entraîne que très peu de modifications. Il suffit de remplacer le retour à la masse de la suspension par une connexion adéquate vers des moyens d'exploitation 9 placés sur le véhicule, de prévoir une seule isolation du roulement 5, entre sa cage intérieure 51 et la transmission mécanique 8, et de prévoir une connexion électrique entre ladite cage intérieure 51 et les moyens de surveillance implantés sur la roue 1.

Ainsi, l'invention permet, en choisissant l'une ou l'autre des voies de réalisation illustrées, de simplifier au maximum la réalisation de la conduction électrique entre l'espace fixe et une roue, en utilisant judicieusement les isolations électriques existantes sur les véhicules, et en intégrant dans le circuit électrique nécessaire un élément non suspendu situé dans l'espace fixe, à savoir par exemple le porte-roue 4, et le plus souvent un élément de suspension, selon la facilité qu'il y a à réaliser une connexion électrique.

**Revendications**

1. Dispositif de transmission d'un signal électrique par conduction électrique depuis une roue motrice (1), mobile en rotation, vers l'espace fixe d'un véhicule supportant ladite roue (1) par l'intermédiaire d'éléments de suspension, ladite conduction électrique étant assurée par deux chemins conducteurs de l'électricité, l'un assurant la connexion électrique entre les moyens (9) placés sur le véhicule et les moyens (10) placés sur la roue (1), l'autre assurant le retour vers la masse du véhicule, le chemin conducteur connecté, sur le véhicule, aux moyens (9) placés sur le véhicule comprenant au moins un roulement (5) de la roue motrice (1) considérée, caractérisé en ce que le chemin conducteur connecté sur le véhicule, auxdits moyens (9) placés sur le véhicule comprend au moins un élément non suspendu situé dans l'espace fixe, ledit élément étant en contact électrique avec la cage extérieure dudit roulement (5).

2. Dispositif selon la revendication 1, caractérisé en ce que
   – le chemin conducteur connecté auxdits moyens (9) placés sur le véhicule comprend en outre la roue (1),
   – la transmission mécanique (8) du couple moteur comporte une isolation électrique (80) entre une partie (81) liée par conduction électrique avec ledit élément via ledit roulement (5), et une partie (82) en contact électrique avec la masse du véhicule,
   – un élément conducteur (6) est connecté d'une part à la partie (82) de la transmission mécanique en contact électrique avec la masse du véhicule, et est connecté d'autre part auxdits moyens (10) placés sur la roue.

3. Dispositif selon la revendication 2, caractérisé en ce que ledit élément conducteur est un fil conducteur isolé (6) traversant la partie (81) de la transmission mécanique isolée électriquement de la masse approximativement par son centre, et rejoignant les moyens (10) implantés sur de la roue.

4. Dispositif selon la revendication 2, caractérisé en ce que les moyens (10) placés sur la roue sont constitués par un composant (10A) électrique sensible à la pression du pneumatique, ledit composant (10A) sensible à la pression étant monté à l'intérieur de la transmission mécanique (81), et étant mis en contact pneumatique avec la pression régnant à l'intérieur du pneumatique (2) par une canalisation d'air (11), en contact électrique par l'un de ses pôles (101A) avec la partie (81) de la transmission (8) en contact électrique avec ledit élément, et par l'autre (102A) de ses pôles avec le partie (82) de la transmission (8) en contact électrique avec la masse.

5. Dispositif selon l'une des revendications 2 à 4, caractérisé en ce que le chemin conducteur comprenant ledit élément comprend les éléments de freinage (30).

6. Dispositif selon la revendication 1, caractérisé en ce que la cage intérieure (51) du roulement (5) est isolée électriquement de la transmission mécanique (8) du couple moteur, et est reliée par un fil électrique (6A) avec lesdits moyens (10) placés sur la roue (1), l'autre des chemins conducteurs comportant la roue (1) considérée et la transmission mécanique (8) du couple moteur.

**Patentansprüche**

1. Vorrichtung zur Übertragung eines elektrischen Signales durch elektrische Leitung von einem drehbaren Antriebsrad (1) zum fahrzeugfesten Bereich des, das Rad (1) tragende Fahrzeuges mittels Aufhängungselementen, wobei die elektrische Leitung über zwei elektrisch leitende Bahnen gesichert ist, von denen die eine die elektrische Verbindung zwischen den Mitteln (9), die im Fahrzeug untergebracht sind und den Mitteln (10), die im Rad untergebracht sind, sichert, während die andere die Rückleitung zur Masse des Fahrzeuges sichert, wobei die Leiterbahn, die am Fahrzeug mit den Mitteln (9) am Fahrzeug verbunden ist, zumindest ein Wälzlager (5) des betrachteten Antriebsrades (1) umfaßt, dadurch gekennzeichnet, daß die am Fahrzeug mit den am Fahrzeug vorgesehenen Mitteln (9) verbundene Leiterbahn zumindest ein nicht getragenes Element im fahrzeugfesten Bereich umfaßt, wobei dieses Element in elektrischem Kontakt mit dem Außengehäuse des Wälzlagers (5) steht.

2. Vorrichtung nach Anspruch 1, dadurch gekennzeichnet, daß

– die mit den am Fahrzeug vorgesehenen Mitteln (9) verbundene Leiterbahn darüberhinaus das Rad (1) umfaßt,

– die mechanische Transmission (8) für das Motordrehmoment eine elektrische Isolierung (80) zwischen einem Teil (81), der elektrisch leitend mit diesem Element über dieses Wälzlager (5) verbunden ist und einem Teil (82), der in elektrischem Kontakt mit der Masse des Fahrzeuges steht, aufweist,

– ein Leiterelement (6) einerseits mit dem Teil (82) der mechanischen Transmission, die in elektrischem Kontakt mit der Masse des Fahrzeuges steht, und andererseits mit den Mitteln (10), die auf dem Fahrzeug angeordnet sind, verbunden ist.

3. Vorrichtung nach Anspruch 2, dadurch gekennzeichnet, daß das Leiterelement ein isoliertes Leiterkabel (6) ist, das den elektrisch passend von der Masse isolierten Teil (81) der mechanischen Transmission annähernd in seinem Zentrum durchquert und mit den Mitteln (10), die auf dem Rad vorgesehen sind, in Verbindung steht.

4. Vorrichtung nach Anspruch 2, dadurch gekennzeichnet, daß die Mittel (10), die auf dem Rad vorgesehen sind, aus einem elektrischen Aufnehmer (10A), der auf den Druck im Luftreifen reagiert, bestehen, wobei der auf den Druck reagierende Aufnehmer (10A) im Inneren der mechanischen Transmission (81) vorgesehen ist und durch eine Luftverbindung (11) in pneumatischen Kontakt mit dem im Inneren des Luftreifens (2) herrschenden Druck steht und mit einer seiner Pole (101A) in elektrischem Kontakt mit dem Teil (81) der Transmission (8), die elektrischen Kontakt mit diesem Element hat, und mit dem anderen seiner Pole (102A) in elektrischem Kontakt mit dem Teil (82) der Transmission (8), die elektrischen Kontakt mit der Masse hat, steht.

5. Vorrichtung nach einem der Ansprüche 2 bis 4, dadurch gekennzeichnet, daß die Leiterbahn, die das Element enthält, die Bauteile der Bremse (30) umfaßt.

6. Vorrichtung nach Anspruch 1, dadurch gekennzeichnet, daß das Innengehäuse (51) des Wälzlagers (5) elektrisch von der mechanischen Transmission (8) für das Motordrehmoment isoliert ist und durch einen elektrisch leitenden Draht (6A) mit den Mitteln (10), die am Rand angeordnet sind, in Verbindung steht, und daß die andere Leiterbahn das betrachtete Rad (1) und die mechanische Transmission (8) für das Motordrehmoment umfaßt.

## Claims

1. Device for transmitting an electrical signal by electric conduction from a rotatable driving wheel (1) to a stationary portion of a vehicle supporting said wheel (1) by means of suspension means said electric conduction being made by two electrically conductive paths, one of said paths providing the electric connection between means (9) located on and means (10) located on the wheel (1), the other path providing the grounding to the vehicle, the electrical path connected on the vehicle to the means (9) located on the vehicle comprising at least one bearing (5) of said driving wheel (1), characterized by the fact that said electric path connected on the vehicle to the means (9) located on the vehicle comprises at least one unsuspended element located on the stationary portion, said element being in electric contact with the outside race of said bearing.

2. Device according to claim 1, characterized by the fact that

– the conductive path connected to said means (9) placed on the vehicle further comprises the wheel (1),

– the mechanical engine torque transmission (8) comprises an electrical insulation (80) between a part (81) electrically connected to said element via said bearing (5) and a part (82) which is grounded to the vehicle,

– an electrically conductive element (6) is connected on one hand to said part (82) of the mechanical transmission which is grounded to the vehicle, and on the other hand to said means (10) located on the wheel.

3. Device according to claim 2, characterized by the fact that said electrically conductive element is an insulated conductive wire (6) going approximately through the center of part (81) of the mechanical transmission insulated from the ground, and connected to means (10) located on the wheel.

4. Device according to claim 2, characterized by the fact that means (10) located on the wheel consists of a tyre pressure sensor (10A) positioned inside of said mechanical transmission (81), being put in pneumatic contact with the pressure prevailing inside the tire (2) by an air duct (11), and in electric contact by one of its poles (101A) with the part (81) of the transmission (8) in electric contact with said element, and by the other of its poles (102A) with the part (82) of the transmission (8) in electric contact with the ground.

5. Device according to one of claims 2 to 4, characterized by the fact that said electric path comprising said element comprises braking elements (30).

6. Device according to claim 1, characterized by the fact that the inside race (51) of the beariang (5) is insulated from the mechanical engine torque transmission (8) and is bonded with an electrical conductive wire (6A) to said means (10) located on the wheel (1), the other path comprising said wheel (1) and the mechanical engine torque transmission (8).

FIG1

**92**

**+12v**

**91**

**FIG 2**

**FIG3**

FIG 4